# EUROPEAN PATENT APPLICATION

(11) **EP 4 567 939 A1**
(43) Date of publication of application: **11.06.2025**
(21) Application number: 23215207.4
(22) Date of filing: 08.12.2023
(51) Int. Cl.: H01M 8/04014, H01M 8/04089, H01M 8/04225, H01M 8/04302, H01M 8/04701, H01M 8/04746, H01M 8/04791, H01M 8/04223, H01M 8/10

(54) **METHODS FOR OPERATING FUEL CELL SYSTEMS IN CONNECTION WITH START-UP OF THE SYSTEMS**

(71) Applicant: VOLVO TRUCK CORPORATION, 405 08 Göteborg (SE)
(72) Inventor: Neilson, Rohan, 721 31 Västerås (SE); Arya, Pranav, 412 85 Göteborg (SE)
(74) Representative: Valea AB

(57) **Abstract**

The present disclosure relates to a fuel cell system and a computer implemented method for operating a fuel cell system (200). The fuel cell system comprises:
- a fuel cell stack (225) comprising an anode side (230a) and a cathode side (220a), wherein the cathode side (220a) comprises a cathode volume (220) and an air intake tract (210),
- a catalytic device (260),
- a plurality of fluid flow control devices (241, 242, (244)
- a hydrogen gas supply device (280)

The method comprises:
- controlling (S1) the hydrogen gas supply device (280) to supply the hydrogen gas to the catalytic device (260) of the fuel cell system (200),
- controlling (S2-1) operation of the second fluid flow control device (242) to disable a fluid connection between the air intake tract (210) and the cathode volume (220),
- controlling (S2-2) operation of the fourth fluid flow control device ((244) to disable a fluid connection between the air intake tract (210) and the air source (290), and
- controlling (S2-3) operation of the first fluid flow control device (241) to enable a recirculation loop (245) between the air intake tract (210) and the catalytic device (260), such that that oxygen of the air present in the air intake tract (210) undergoes a chemical reaction with the supplied hydrogen within the recirculation loop (245), resulting in a reduced amount of oxygen in the air intake tract (210).

## Description

### TECHNICAL FIELD

The disclosure relates generally to fuel cell systems. In particular aspects, the disclosure relates to methods for operating fuel cell systems in connection with start-up of the systems. The disclosure also relates to a fuel cell system, a computer system, a computer program product and a non-transitory computer-readable storage medium. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A fuel cell is an electrochemical cell which converts chemical energy into electricity. The fuel cell converts the chemical energy of a fuel, typically hydrogen, and an oxidant, typically oxygen, into electricity. Accordingly, a fuel cell can be used as an alternative or as a complement to electric batteries. In recent years fuel cells have been considered for powering electric vehicles.

The fuel cell comprises an anode and an anode volume to which fuel is supplied, a cathode and a cathode volume to which oxidant is supplied, and an electrolyte provided between the anode and the cathode. A catalyst provided at the anode causes the fuel to undergo oxidation reactions, generating ions and electrons. The ions move from the anode to the cathode through the electrolyte. Electrons flow from the anode to the cathode through an external circuit, producing electricity.

A fuel cell system which comprises one or more fuel cells is prone to degradation due to start-up and shutdown of the system. Degradation may, e.g., be caused by oxidation resulting from residual oxidant in the fuel cell. Degradation may also be caused by residual fuel in the anode flow field at fuel cell shutdown, which may contaminate the cathode flow field. At fuel cell start-up, the anode and cathode flow fields may contain a mixture of fuel and oxidant, which can cause hot spots and high potentials, contributing to degradation of the fuel cells.

During shutdown of the fuel cell system, the cathode can be shut-off from air supply and the remaining oxygen consumed to drop the fuel cell voltage to a safely low level. This condition is maintained by the remaining hydrogen present and often termed hydrogen-protection. After some time, hydrogen crosses over to the cathode side, and when the shut-off valves open and air begins to flow at next start the transition from hydrogen to oxygen causes a reaction front and a direct mixing on the cathode, causing degradation.

### SUMMARY

According to a first aspect of the disclosure, a computer system comprising processing circuitry configured to operate a fuel cell system in connection with start-up of the fuel cell system according to claim 1 is provided. The fuel cell system comprises:
- a fuel cell stack comprising an anode side and a cathode side, wherein the cathode side comprises a cathode volume fluidly connectable with an air intake tract through which air is supplied from a connectable air source to the cathode volume,
- a catalytic device fluidly connectable with the air intake tract,
- a plurality of fluid flow control devices comprising:
- a first fluid flow control device controllable to enable a recirculation loop between the air intake tract and the catalytic device,
- a second fluid flow control device controllable to enable a fluid connection between the air intake tract and the cathode volume,
- a fourth fluid flow control device controllable to enable a fluid connection between the air intake tract and the air source, and
- a hydrogen gas supply device configured to supply hydrogen gas to the fuel cell system,
the processing circuitry further being configured to:
- control operation of the hydrogen gas supply device to supply the hydrogen gas to the catalytic device of the fuel cell system,
- control operation of the second fluid flow control device to disable the fluid connection between the air intake tract and the cathode volume,
- control operation of the fourth fluid flow control device to disable the fluid connection between the air intake tract and the air source, and
- control operation of the first fluid flow control device to enable the recirculation loop between the air intake tract and the catalytic device, such that oxygen of the air present in the air intake tract undergoes a chemical reaction with the supplied hydrogen within the recirculation loop, resulting in a reduced amount of oxygen in the air intake tract.

The first aspect of the disclosure may seek to prevent the formation of a hydrogen-oxygen reaction front within the fuel cell stack. As such, a softer transition from a hydrogen atmosphere to a condition that is favorable for start-up may be achieved. A technical benefit may include an improved overall performance and efficiency of the fuel cell system. The technical benefit is achieved by implementation of the recirculation loop and deliberate depletion of oxygen. The amount of oxygen may be reduced gradually within the recirculation loop, and the air may eventually become oxygen-free before it is allowed to reach the fuel cell stack.

The recirculation loop may be understood as a closed circuit or a continuous path where a gas mixture moves in a repeated manner. The loop may be enabled by properly controlling operations of the plurality of the fluid flow control devices. Herein the fluid flow control devices may be any suitable mechanisms designed to control the opening and closing of fluid connections between any fluid conduits. The fluid flow control devices may, for instance, be multi-way valves, capable of managing on/off states of the fluid connections. The operations of the plurality of the fluid flow control devices may be controlled such that a fluid connection between the catalytic device and the air intake tract is enabled while concurrently fluid connections between the air intake tract and the cathode volume and/or the air source is disabled.

Optionally in some examples, including in at least one preferred example, the fuel cell system further comprises a gas recirculation device configured to recirculate a gas mixture present in the recirculation loop. The processing circuitry is further configured to:
- control the gas recirculation device to recirculate the gas mixture through the catalytic device within the recirculation loop.

The injected hydrogen may move to the air intake, mix with the air and circulate within the recirculation circuit by diffusion. By using a gas recirculation device, it may enhance the efficiency of the circulation process and as a result, the chemical reaction between the oxygen and the supplied hydrogen may be enhanced. A technical benefit may include that the oxygen is depleted in an efficient way. The gas recirculation device may be any suitable device that may circulate gas within a system. Purely by way of example, it be a blower which may also be able to control a recirculation rate as needed. Alternatively, the gas recirculation device may be a fan, a pump or a compressor.

Optionally in some examples, including in at least one preferred example, the processing circuitry is further configured to:
- estimate a remaining oxygen level in the air within the air intake tract,
- in response to the estimated remaining oxygen level being lower than an oxygen threshold value, indicative of oxygen-free air, control operation of the first fluid flow control device to disable the recirculation loop between the air intake tract and the catalytic device, and
- control the hydrogen gas supply device to stop supplying the hydrogen gas to the catalytic device of the fuel cell system.

By estimating the remaining oxygen level, it may be possible to terminate the recirculation process and the supply of the hydrogen at an appropriate instance, e.g., after the oxygen has been completely, or sufficiently, removed. The term "oxygen-free air" is not an absolute measure, but is herein to be understood as air in which the oxygen content is lower than the oxygen threshold value. The oxygen threshold value may refer to the oxygen concentration being lower than 10 %, more preferably lower than 6% and most preferably lower than 4%.

Optionally in some examples, including in at least one preferred example, the processing circuitry is further configured to:
- monitor a temperature at the catalytic device and/or of the gas mixture, and
- estimate the remaining oxygen level in the air based on the monitored temperature.

The temperature at the catalytic device and/or of the gas mixture may generally provide a good indication of the ongoing chemical reaction process of the supplied hydrogen and the oxygen, which may also be an indication of the remaining oxygen level. By using temperature information to evaluate the remaining oxygen level in the gas mixture, it may eliminate the need of using a dedicated and a more costly oxygen sensor for the estimation. A technical benefit may include that the estimation may be performed using relatively simple and robust equipment.

Optionally in some examples, including in at least one preferred example, the start-up of the fuel cell system is associated with a condition in which hydrogen gas is present as residual gas in the cathode volume.

Optionally in some examples, including in at least one preferred example, the plurality of fluid flow control devices further comprises a third fluid flow control device controllable to enable a fluid connection between the cathode volume and an exhaust conduit of the cathode volume. The processing circuitry is further configured to:
- in response to the recirculation loop being disabled, control operation of the second fluid flow control device to enable the fluid connection between the air intake tract and the cathode volume, and
- control operation of the third fluid flow control device to enable the fluid connection between the cathode volume and the exhaust conduit of the cathode volume, such that the oxygen-free air gradually pushes any residual hydrogen out of the cathode volume, resulting a reduced amount of residual hydrogen in the cathode volume.

After the air intake tract is fluidly connected with the cathode volume, and the cathode volume is fluidly connected to the exhaust conduit of the cathode volume, the oxygen-free air may gradually move to the cathode volume and push the residual hydrogen out of the cathode volume. The oxygen-free air herein may function as inert gas for purging the cathode volume, and thus it may eliminate a need for a dedicated tank to store the inert gas. A technical benefit may include a reduced degradation of the fuel cell system.

Optionally in some examples, including in at least one preferred example, the processing circuitry is further configured to:
- estimate a residual hydrogen level in the cathode volume,
- in response to the residual hydrogen present in the cathode volume being lower than a hydrogen threshold value, control operation of the fourth fluid flow control device to enable the fluid connection between the air intake tract and the air source, and start the fuel cell system.

The hydrogen threshold value may be a value that indicates a sufficiently low level of hydrogen gas within the cathode volume. After the residual hydrogen gas in the cathode volume has been completely, or sufficiently, removed, the fuel cell system may be well-prepared for start-up. Purely by way of example, the hydrogen threshold value may refer to the hydrogen concentration being lower than 10 %, more preferably lower than 6% and most preferably lower than 4%. A technical benefit may include improved preparation for starting up the fuel cell system.

The residual hydrogen level may be estimated by monitoring the temperature within the cathode volume. Generally, temperature may begin to increase when the oxygen-free air starts to move to the cathode, where residual hydrogen and air are both present in the cathode volume. Thereafter, as hydrogen is displaced from the cathode volume, the temperature may gradually decline. By using the temperature information, it may eliminate the need of using a dedicated and a more costly hydrogen sensor for the estimation.

According to a second aspect of the disclosure, a computer-implemented method for operating a fuel cell system in connection with start-up of the fuel cell system according to claim 2 is provided. The fuel cell system comprises:
- the computer system according to the first aspect of the disclosure,
- a fuel cell stack comprising an anode side and a cathode side, wherein the cathode side comprises a cathode volume fluidly connectable with an air intake tract through which air is supplied from a connectable air source to the cathode volume,
- a catalytic device fluidly connectable with the air intake tract,
- a plurality of fluid flow control devices comprising:
- a first fluid flow control device controllable to enable a recirculation loop between the air intake tract and the catalytic device,
- a second fluid flow control device controllable to enable a fluid connection between the air intake tract and the cathode volume,
- a fourth fluid flow control device controllable to enable a fluid connection between the air intake tract and the air source, and
- a hydrogen gas supply device configured to supply hydrogen gas to the fuel cell system,
The method comprises:
- controlling, by the processing circuitry of the computer system, the hydrogen gas supply device to supply the hydrogen gas to the catalytic device of the fuel cell system,
- controlling, by the processing circuitry, operation of the second fluid flow control device to disable the fluid connection between the air intake tract and the cathode volume,
- controlling, by the processing circuitry, operation of the fourth fluid flow control device to disable the fluid connection between the air intake tract and the air source, and
- controlling, by the processing circuitry, operation of the first fluid flow control device to enable the recirculation loop between the air intake tract and the catalytic device, such that that oxygen of the air present in the air intake tract undergoes a chemical reaction with the supplied hydrogen within the recirculation loop, resulting in a reduced amount of oxygen in the air intake tract.

Advantages and technical benefits of the second aspect of the disclosure are largely analogous to the advantages and technical benefits of the first aspect of the disclosure. It shall also be noted that all examples of the second aspect of the disclosure may be combined with all examples of the first aspect of the disclosure, and vice versa.

Optionally in some examples, including in at least one preferred example, wherein the fuel cell system further comprises a gas recirculation device configured to recirculate a gas mixture present in the recirculation loop. The method further comprises:
- controlling, by the processing circuitry, the gas recirculation device to recirculate the gas mixture through the catalytic device within the recirculation loop.

Optionally in some examples, including in at least one preferred example, estimating the remaining oxygen level in the gas mixture further comprises:
- estimating, by the processing circuitry, a remaining oxygen level in the air within the air intake tract,
- in response to the estimated remaining oxygen level being lower than an oxygen threshold value, indicative of oxygen-free air, controlling, by the processing circuitry, operation of the first fluid flow control device to disable the recirculation loop between the air intake tract and the catalytic device, and
- controlling, by the processing circuitry, the hydrogen gas supply device to stop supplying the hydrogen gas to the catalytic device of the fuel cell system.

Optionally in some examples, including in at least one preferred example, the method further comprises:
- monitoring, by the processing circuitry, a temperature at the catalytic device and/or of the gas mixture,
- estimating, by the processing circuitry, the remaining oxygen level in the air based on the monitored temperature.

Optionally in some examples, including in at least one preferred example, the start-up of the fuel cell system is associated with a condition in which hydrogen gas is present as residual gas in the cathode volume.

Optionally in some examples, including in at least one preferred example, the plurality of fluid flow control devices further comprises a third fluid flow control device controllable to enable a fluid connection between the cathode volume and an exhaust conduit of the cathode volume, wherein the method further comprises:
- in response to the recirculation loop being disabled, controlling, by the processing circuitry, operation of the second fluid flow control device to enable the fluid connection between the air intake tract and the cathode volume, and controlling, by the processing circuitry, operation of the third fluid flow control device to enable the fluid connection between the cathode volume and the exhaust conduit of the cathode volume, such that the oxygen-free air gradually pushes any residual hydrogen out of the cathode volume, resulting a reduced amount of residual hydrogen in the cathode volume.

Optionally in some examples, including in at least one preferred example, the method further comprises:
- estimating, by the processing circuitry, a residual hydrogen present in the cathode volume,
- in response to the residual hydrogen present in the cathode volume being lower than a hydrogen threshold value, controlling, by the processing circuitry, operation of the fourth fluid flow control device to enable the fluid connection between the air intake tract and the air source, and starting, by the processing circuitry, the fuel cell system.

According to a third aspect of the disclosure, a computer program product is provided. The computer program comprises program code for performing, when executed by the processing circuitry, the method according to the second aspect of the disclosure.

According to a fourth aspect of the disclosure, a non-transitory computer-readable storage medium is provided. The non-transitory computer-readable storage medium comprises instructions, which when executed by the processing circuitry, cause the processing circuitry to perform the method according to the second aspect of the disclosure.

According to a fifth aspect of the disclosure, a fuel cell system for supplying electric power is provided. The fuel cell system comprises:
- a fuel cell stack comprising an anode side and a cathode side, wherein the cathode side comprises a cathode volume fluidly connectable with an air intake tract through which air is supplied from a connectable air source to the cathode volume,
- a catalytic device fluidly connectable with the air intake tract,
- a plurality of fluid flow control devices comprising:
- a first fluid flow control device controllable to enable a recirculation loop between the air intake tract and the catalytic device,
- a second fluid flow control device controllable to enable a fluid connection between the air intake tract and the cathode volume, and
- a fourth fluid flow control device controllable to enable a fluid connection between the air intake tract and the air source,
- a hydrogen gas supply device configured to supply hydrogen gas to the fuel cell system, and
- the computer system according to the first aspect of the disclosure.

The computer system may be configured to control operations of the fluid control flow devices and the hydrogen gas supply device during the start-up of the fuel cell system, which may seek to prevent the formation of a hydrogen-oxygen reaction front within the fuel cell stack. Advantages and technical benefits of the third aspect of the disclosure are largely analogous to the advantages and technical benefits of the first aspect and/or the second aspect of the disclosure.

Optionally in some examples, including in at least one preferred example, the hydrogen gas supply device comprises a fuel injector configured to supply the hydrogen gas at a determined injection rate. The injection rate may be determined, for instance, based on a recirculation rate within the recirculation loop. It may ensure efficient and effective reaction between the supplied gas and the oxygen present in the air intake tract.

Optionally in some examples, including in at least one preferred example, the plurality of fluid flow control devices further comprises a third fluid flow control device controllable to enable a fluid connection between the cathode volume and an exhaust conduit of the cathode volume.

Optionally in some examples, the fuel cell system further comprises a gas recirculation device configured to recirculate a gas mixture present in the recirculation loop.

Optionally in some examples, including in at least one preferred example, the catalytic device is further fluidly connectable with an exhaust conduit of the cathode volume, wherein the first fluid flow control device is further controllable to enable a fluid connection between the catalytic device and the exhaust conduit of the cathode volume. In this way, it may become feasible to establish a fluid connection between the catalytic device with the exhaust conduit when it is needed. For instance, during a cold start, air may be supplied to pass through the catalytic device to the exhaust conduit, where it is heated in the catalytic device, which may efficiently contribute to the heating process of the entire fuel cell system, bringing it to its required operational temperature. A technical benefit may include that a more flexible configuration is achieved.

Optionally in some examples, including in at least one preferred example, the catalytic device is a catalytic heat exchanger.

According to a sixth aspect of the disclosure, a fuel cell electric vehicle comprising the fuel cell system according to the fifth aspect is provided.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

**FIG. 1** is a schematic side view of a vehicle according to an example;
**FIG. 2** is a schematic view of a fuel cell system according to an example;
**FIG. 3** is a flow chart illustrating a method of operating a fuel cell system in connection with start-up of the fuel cell system according to an example;
**FIG. 4a** and **FIG. 4b** are flow charts illustrating optional steps of the method of **FIG. 3**, according to an example;
**FIG. 5** is a schematic diagram of an exemplary computer system for implementing examples disclosed herein.

### DETAILED DESCRIPTION

The detailed description set forth below provides information and examples of the disclosed technology with sufficient detail to enable those skilled in the art to practice the disclosure.

A fuel cell system which comprises one or more fuel cells is prone to degradation due to start-up and shutdown of the system. Degradation may, e.g., be caused by oxidation resulting from residual oxidant in the fuel cell. Degradation may also be caused by residual fuel in the anode flow field at fuel cell shutdown, which may contaminate the cathode flow field. At fuel cell start-up, the anode and cathode flow fields may contain a mixture of fuel and oxidant, which can cause hot spots and high potentials, contributing to degradation of the fuel cells. During shutdown of the fuel cell system, the cathode can be shut-off from air supply and the remaining oxygen consumed to drop the fuel cell voltage to a safely low level. This condition is maintained by the remaining hydrogen present and often termed hydrogen-protection. After some time, hydrogen crosses over to the cathode side, and when the shut-off valves open and air begins to flow at next start the transition from hydrogen to oxygen causes a reaction front and a direct mixing on the cathode, causing degradation.

The first aspect of the disclosure may seek to prevent the formation of a hydrogen-oxygen reaction front within the fuel cell stack. As such, a softer transition from a hydrogen atmosphere to a condition that is favorable for start-up may be achieved. A technical benefit may include an improved overall performance and efficiency of the fuel cell system.

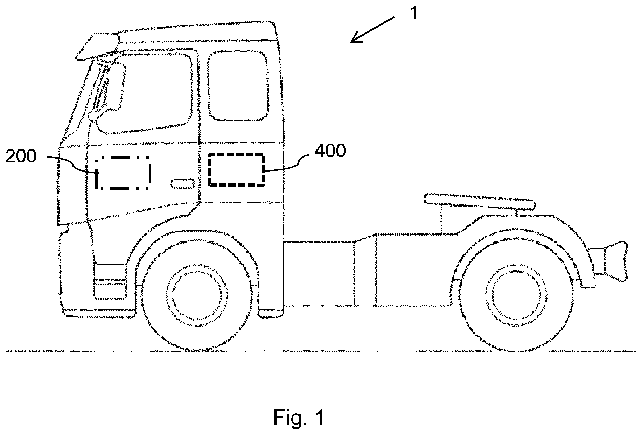

**Fig. 1** depicts a side view of a vehicle 1 according to an example. The vehicle 1 is here a truck, more specifically a heavy-duty truck for towing one or more trailers (not shown). Even though a heavy-duty truck 1 is shown it shall be noted that the disclosure is not limited to this type of vehicle but may be applicable for any other type of vehicle, such as a bus, construction equipment, e.g.., a wheel loader and an excavator, and a passenger car. The disclosure is also applicable for other applications in which a fuel cell is utilized, e.g., in stationary applications such as backup power generation systems, or in marine vessels.

The vehicle 1 comprises a fuel cell system 200 according to an example. The fuel cell system 200 is here used for powering one or more electric motors (not shown) which are used for creating a propulsion force to the vehicle 1. The fuel cell system 200 may additionally or alternatively be used for powering other electric power consumers of the vehicle 1, such as an electric motor for a refrigerator system, an electric motor for an air conditioning system or any other electric power consuming function of the vehicle 1. The electric power produced by the fuel cell system 200 may also be used to charge high-voltage batteries of the energy storage system (not shown). Power stored in the high-voltage energy storage system may further be fed to the one or more electric motors.

The vehicle 1 further comprises a control unit 400 according to an example of the invention. The control unit 400 is thus used for controlling the fuel cell system 100. Even though an on-board control unit 400 is shown, it shall be understood that the control unit 400 could also be a remote control unit 400, i.e., an off-board control unit, or a combination of an on-board and off-board control unit. The control unit 400 may be configured to control the fuel cell system 200 by issuing control signals and by receiving status information relating to the fuel cell system 200.

The control unit 400 is an electronic control unit and may comprise processing circuitry 402 which is adapted to run a computer program as disclosed herein. The control unit 400 may comprise hardware and/or software for performing the method according to the invention. In an example the control unit 400 may be denoted a computer. The control unit 400 may be constituted by one or more separate sub-control units. In addition, the control unit 400 may communicate by use of wired and/or wireless communication means.

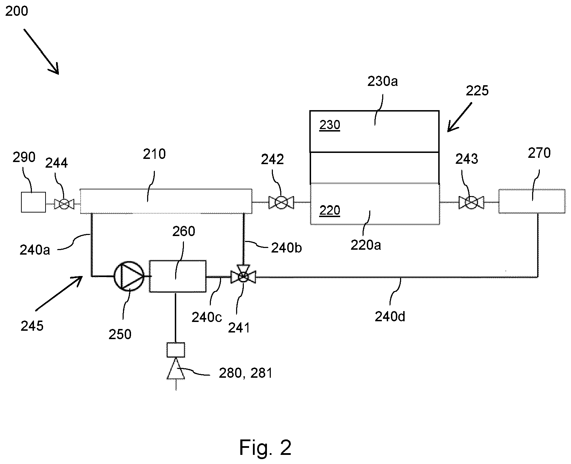

**Fig. 2** is a schematic illustration of a fuel cell system 100 according to a first example. The fuel cell system 200 may for example be used in the vehicle 1 as shown in **Fig. 1****.** The shown fuel cell system 200 is a polymer electrolyte (PEM) fuel cell system configured to generate electrical current from a first reactant in the form of oxidant, such as air, and a second reactant in the form of fuel, such as hydrogen.

The fuel cell system 200 comprises a fuel cell stack 225, which in turn comprises a plurality of fuel cells, such as several hundreds of fuel cells. The fuel cell stack 225 has a cathode side 220a and an anode side 230a. Each fuel cell (not illustrated in detail) comprises an anode catalyst (not shown) and a cathode catalyst (not shown) provided on opposed sides of a polymer electrolyte. The anode side 230a comprises an anode volume 230 which may have an anode flow path is in fluid communication with the anode catalyst for directing the fuel to flow through the fuel cell adjacent the anode catalyst. The cathode side 220a comprises a cathode volume 220 which may have a cathode flow path is in fluid communication with the cathode catalyst for directing the oxidant to flow through the fuel cell adjacent the cathode catalyst. The anode catalyst causes the fuel, e.g., hydrogen gas, to undergo oxidation reactions, generating ions and electrons. The ions move from the anode side 230a to the cathode side 220a through the electrolyte. Electrons flow from the anode side 230a to the cathode side 220 through an external circuit (not shown), producing electricity.

The fuel cell system 200 further comprises an air intake tract 210 through which air is supplied to the cathode volume 220 from an air source 290, e.g., a compressor. Although it is not shown in the figure, it can be envisaged that the fuel cell system 200 may further comprise a fuel source, e.g., a fuel tank for supplying hydrogen gas to the anode volume 230 through a dedicated conduit. A catalytic device 260 is provided separately from the fuel cell stack 225.

In the illustrated example, the fuel cell system 200 further comprises a plurality of fluid conduits 240a-240c and a plurality of fluid flow control devices 241, 242, 244. More specifically, the fluid flow control devices comprises a first fluid flow control device 241 controllable to enable a recirculation loop 245 between the air intake tract 210 and the catalytic device 260, a second fluid flow control device 242 controllable to enable a fluid connection between the air intake tract 210 and the cathode volume 220, and a fourth fluid flow control device 244 controllable to enable a fluid connection between the air intake tract 210 and the air source 290. These fluid flow control devices may for instance be multi-way valves that are designed to control the opening and closing of fluid connections between any fluid conduits. By appropriately controlling the operations of these fluid flow control devices, a closed recirculation loop 245 may be formed between the catalytic device 260 and the air intake tract 210, within which any gas present there may be efficiently recirculated. In addition, a gas recirculation device 250, for instance a blower, is positioned on the recirculation loop 245. The gas recirculation device 250 may be configured efficiently recirculate any gases present within the recirculation loop 245.

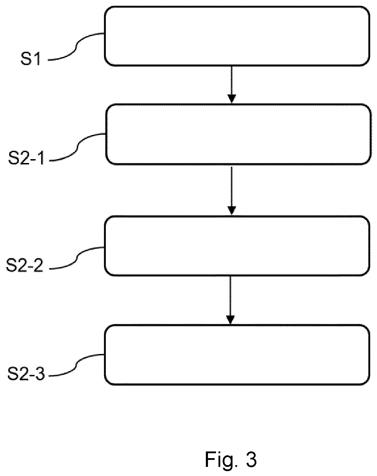

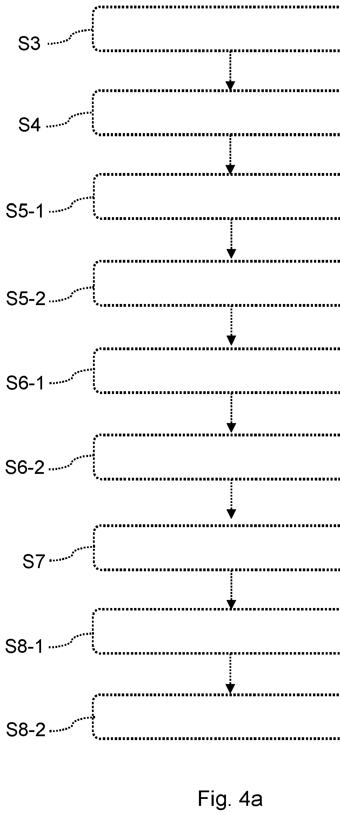

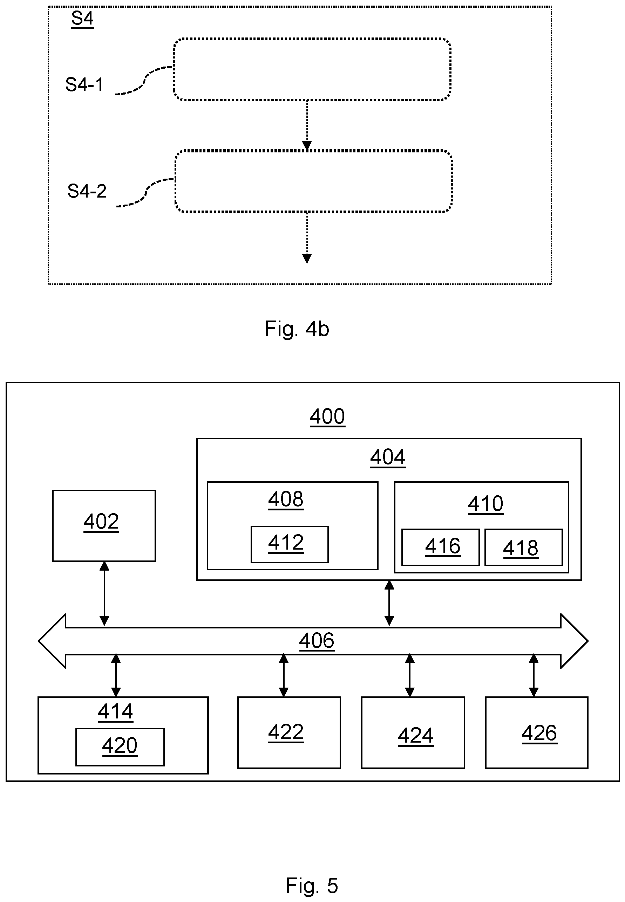

In the illustrated example, the fuel cell system 200 further comprises a hydrogen gas supply device 280, which may comprise a fuel injector 281, which may supplying the hydrogen gas to the catalytic device 260 at an appropriate injection rate. The fuel injector 281 may be connected to a hydrogen tank (not shown) installed on the vehicle 1. During a start-up phase of the fuel cell system 200, the injected hydrogen gas may initially move from the catalytic device 260 to the air intake tract 210 by diffusion and mix with air that is present in the air intake tract 210. The gas mixture may then circulate in recirculation loop 245, preferably with the help of the gas recirculation device 250. During the recirculation process, the hydrogen gas may undergo a chemical reaction with oxygen from the air. The oxygen may eventually be depleted before it reaches fuel cell stack 225. In this way, it may effectively prevent the formation of a potentially hazardous hydrogen-oxygen interface within the fuel cell stack 225. Details of the start-up process will be explained along with **FIG. 3** and **FIG. 4** illustrating a method of operating for operating a fuel cell system in connection with start-up of the fuel cell system.

In the illustrated example, the fuel cell system 200 further comprises an exhaust conduit 270 located downstream of the cathode volume 220. A third fluid control device 243 is arranged to control a fluid connection between the cathode volume 220 and the exhaust conduit 270. Moreover, a fluid conduit 240d is provided to establish a fluid connectivity between the catalytic device 260 and the exhaust conduit 270, whereby the fluid connection is controlled by the first fluid flow control device 241. When it is needed, air may be supplied to pass through the catalytic device 260 to the exhaust conduit 270, where the air is heated by the catalytic device 260, which may efficiently contribute to a heating process of the fuel cell system 200, bringing it to its required operational temperature. In this example, the catalytic device 260 may be a catalytic heat exchanger.

**FIG. 3** is a flow chart illustrating a method of operating a fuel cell system 210 in connection with start-up of the fuel cell system according to an example. The method may be performed in connection with a hydrogen-protected start, wherein hydrogen gas is present as residual gas within the fuel cell stack 225. The method is performed by processing circuitry of the control unit 400 and comprises the actions listed in the following, which, unless otherwise indicated, may be taken in any suitable order.
**S1:** controlling the hydrogen gas supply device 280 to supply the hydrogen gas to the catalytic device 260 of the fuel cell system 200. The hydrogen gas may be supplied by the fuel injector 280 at a certain injection rate. For example, the injection rate may vary depending on a recirculation rate of the gas mixture within the recirculation loop 245.
**S2-1**: controlling operation of the second fluid flow control device 242 to disable the fluid connection between the air intake tract 210 and the cathode volume 220.
**S2-2**: controlling operation of the fourth fluid flow control device 244 to disable the fluid connection between the air intake tract 210 and the air source 290, and
**S2-3**: controlling operation of the first fluid flow control device 241 to enable the recirculation loop 245 between the air intake tract 210 and the catalytic device 260, such that that oxygen of the air present in the air intake tract 210 undergoes a chemical reaction with the supplied hydrogen within the recirculation loop, resulting in a reduced amount of oxygen in the air intake tract 210.

A closed recirculation loop 245 is established by properly controlling operations of the fluid flow control devices 241, 242, 244. After the hydrogen gas is injected, the injected hydrogen gas may initially move from the catalytic device 260 to the air intake tract 210 and mix with air that is present in the air intake tract 210. The gas mixture may then circulate in the recirculation loop 245 in a repeated manner and during this process, the hydrogen gas may react with oxygen from the air. When the gas mixture reaches and passes through the catalytic device 260, the reaction between the hydrogen gas and oxygen may be significantly promoted. The oxygen may eventually be completely, or sufficiently, depleted before it is allowed to reach fuel cell stack 225.

In some examples, the method further comprises the following optional actions:
**S3:** controlling the gas recirculation device 250 to recirculate the gas mixture through the catalytic device 260 within the recirculation loop 245.

The gas recirculation device 260 may enhance efficiency of the circulation process and as a result, the reaction between the oxygen and the supplied hydrogen may be further enhanced.
**S4**: estimating a remaining oxygen level in the air within the air intake tract 210,
**SS-1**: in response to the estimated remaining oxygen level being lower than an oxygen threshold value, indicative of oxygen-free air, controlling operation of the first fluid flow control device 241 to disable the recirculation loop 245 between the air intake tract 210 and the catalytic device 260, and
**S5-2**: controlling the hydrogen gas supply device 280 to stop supplying the hydrogen gas to the catalytic device 260 of the fuel cell system 200.

In some examples, the action **S4** may further comprise the following sub actions, which is illustrated in **FIG. 4b**:
**S4-1:** monitoring a temperature at the catalytic device 260 and/or of the gas mixture,
**S4-2**: estimating the remaining oxygen level in the air based on the monitored temperature.

The temperature at the catalytic device and/or of the gas mixture may generally provide a good indication of the ongoing chemical reaction process of the supplied hydrogen and residual oxygen, which may also be an indication of the remaining oxygen level.

The method may further comprise the following actions:
**S6-1:** in response to the recirculation loop 245 being disabled, controlling, operation of the second fluid flow control device 242 to enable the fluid connection between the air intake tract 210 and the cathode volume 220, and
**S6-2**: controlling operation of the third fluid flow control device 243 to enable the fluid connection between the cathode volume 220 and the exhaust conduit 270 of the cathode volume 220, such that the oxygen-free air gradually pushes any residual hydrogen out of the cathode volume 220, resulting a reduced amount of residual hydrogen in the cathode volume 220.

When the fluid connection between the air intake tract 210 and the cathode volume 220 is enabled, and when the fluid connection between the cathode volume 220 and the exhaust conduit 270 of the cathode volume 220 is enabled, the oxygen-free air may gradually move to the cathode volume 220 and may push the residual hydrogen out of the cathode volume 220. In this way, the oxygen-free air may eventually replace the residual hydrogen gas without creating a hydrogen-oxygen front within cathode volume 220. The fuel cell system 200 may be well prepared for starting up.

The method may further comprise the following actions:
**S7**: estimating a residual hydrogen level in the cathode volume 220, and
**S8-1:** in response to the residual hydrogen present in the cathode volume 220 being lower than a hydrogen threshold value, controlling, operation of the fourth fluid flow control device 244 to enable the fluid connection between the air intake tract 210 and the air source 290, and
**S8-2**: starting the fuel cell system 200.

**FIG 5****.** illustrates a computer system 400, which may be seen as the control unit 400 of the vehicle 100 and/or the fuel cell system 110. The computer system **400** is adapted to execute instructions from a computer-readable medium to perform these and/or any of the functions or processing described herein. The computer system **400** may be connected e.g., networked) to other machines in a LAN, an intranet, an extranet, or the Internet. While only a single device is illustrated, the computer system **400** may include any collection of devices that individually or jointly execute a set or multiple sets) of instructions to perform any one or more of the methodologies discussed herein. Accordingly, any reference in the disclosure and/or claims to a computer system, computing system, computer device, computing device, control system, control unit, electronic control unit ECU), processor device, processing circuitry, etc., includes reference to one or more such devices to individually or jointly execute a set or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network CAN) bus, etc.

The computer system **400** may comprise at least one computing device or electronic device capable of including firmware, hardware, and/or executing software instructions to implement the functionality described herein. The computer system **400** may include processing circuitry **402** e.g., processing circuitry including one or more processor devices or control units), a memory **404**, and a system bus **406**. The computer system **400** may include at least one computing device having the processing circuitry **402**. The system bus **406** provides an interface for system components including, but not limited to, the memory **404** and the processing circuitry **402**. The processing circuitry **402** may include any number of hardware components for conducting data or signal processing or for executing computer code stored in memory **404**. The processing circuitry **402** may, for example, include a general-purpose processor, an application specific processor, a Digital Signal Processor DSP), an Application Specific Integrated Circuit ASIC), a Field Programmable Gate Array FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** e.g., via a circuit or any other wired, wireless, or network connection) and may include computer code for executing one or more processes described herein. The memory **404** may include non-volatile memory **408** e.g., read-only memory ROM), erasable programmable read-only memory EPROM), electrically erasable programmable read-only memory EEPROM), etc.), and volatile memory **410** e.g., random-access memory RAM)), or any other medium which can be used to carry or store desired program code in the form of machine-executable instructions or data structures and which can be accessed by a computer or other machine with processing circuitry **402**. A basic input/output system BIOS) **412** may be stored in the non-volatile memory **408** and can include the basic routines that help to transfer information between elements within the computer system **400**.

The computer system **400** may further include or be coupled to a non-transitory computer-readable storage medium such as the storage device **414**, which may comprise, for example, an internal or external hard disk drive HDD) e.g., enhanced integrated drive electronics EIDE) or serial advanced technology attachment SATA)), HDD e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The modules) can be implemented as software and/or hard-coded in circuitry to implement the functionality described herein in whole or in part. The modules may be stored in the storage device **414** and/or in the volatile memory **410**, which may include an operating system **416** and/or one or more program modules **418**. All or a portion of the examples disclosed herein may be implemented as a computer program **420** stored on a transitory or non-transitory computer-usable or computer-readable storage medium e.g., single medium or multiple media), such as the storage device **414**, which includes complex programming instructions e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402**. In some examples, the storage device **414** may be a computer program product e.g., readable storage medium) storing the computer program **420** thereon, where at least a portion of a computer program **420** may be loadable e.g., into a processor) for implementing the functionality of the examples described herein when executed by the processing circuitry **402**. The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers IEEE) 1394 serial port, a Universal Serial Bus USB) port, an IR interface, and the like. The computer system **400** may include an output device interface **424** configured to forward output, such as to a display, a video display unit e.g., a liquid crystal display LCD) or a cathode ray tube CRT)). The computer system **400** may include a communications interface **426** suitable for communicating with a network as appropriate or desired.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Moreover, the present disclosure may be exemplified by any one of the below examples and combination of examples.

Example 1: A computer system (400) comprising processing circuitry ((402) configured to operating a fuel cell system (200) in connection with start-up of the fuel cell system ((200), the fuel cell system ((200) comprising:
- a fuel cell stack ((225) comprising an anode side ((230a) and a cathode side ((220a), wherein the cathode side ((220a) comprises a cathode volume (220) fluidly connectable with an air intake tract (210) through which air is supplied from a connectable air source (290) to the cathode volume (220),
- a catalytic device (260) fluidly connectable with the air intake tract (210),
- a plurality of fluid flow control devices (241, 242, (244) comprising:
- a first fluid flow control device (241) controllable to enable a recirculation loop (245) between the air intake tract (210) and the catalytic device (260),
- a second fluid flow control device (242) controllable to enable a fluid connection between the air intake tract (210) and the cathode volume (220),
- a fourth fluid flow control device (244) controllable to enable a fluid connection between the air intake tract (210) and the air source (290), and
- a hydrogen gas supply device 280) configured to supply hydrogen gas to the fuel cell system (200),
the processing circuitry further being configured to:
- control operation of the hydrogen gas supply device (280) to supply the hydrogen gas to the catalytic device (260) of the fuel cell system (200),
- control operation of the second fluid flow control device (242) to disable the fluid connection between the air intake tract (210) and the cathode volume (220),
- control operation of the fourth fluid flow control device ((244) to disable the fluid connection between the air intake tract (210) and the air source (290), and
- control operation of the first fluid flow control device (241) to enable the recirculation loop (245) between the air intake tract (210) and the catalytic device (260), such that oxygen of the air present in the air intake tract (210) undergoes a chemical reaction with the supplied hydrogen within the recirculation loop (245), resulting in a reduced amount of oxygen in the air intake tract (210).

Example 2: The computer system (400) according to Example 1, wherein the fuel cell system (200) further comprises a gas recirculation device (250) configured to recirculate a gas mixture present in the recirculation loop (245), wherein the processing circuitry (400) is further configured to:
- control the gas recirculation device (250) to recirculate the gas mixture through the catalytic device (260) within the recirculation loop (245).

Example 3: The computer system 400 according to any one of Examples 1-2, wherein the processing circuitry (400) is further configured to:
- estimate a remaining oxygen level in the air within the air intake tract (210),
- in response to the estimated remaining oxygen level be lower than an oxygen threshold value, indicative of oxygen-free air, control operation of the first fluid flow control device (241) to disable the recirculation loop (245) between the air intake tract (210) and the catalytic device (260), and
- control the hydrogen gas supply device (280) to stop supply the hydrogen gas to the catalytic device (260) of the fuel cell system (200),

Example 4: The computer system (400) according to Example 3, wherein estimate the remaining oxygen level in the gas mixture further comprises:
- monitor a temperature at the catalytic device (260) and/or of the gas mixture,
- estimate the remaining oxygen level in the air based on the monitored temperature.

Example 5: The computer system (400) according to any one of the Examples 2-5, wherein the start-up of the fuel cell system (200) is associated with a condition in which hydrogen gas is present as residual gas in the cathode volume (220).

Example 6: The computer system (400) according to Example 5, when dependent on any one of Examples 3-4, wherein the plurality of fluid flow control devices further comprises a third fluid flow control device (243) controllable to enable a fluid connection between the cathode volume (220) and an exhaust conduit (270) of the cathode volume (220), wherein the processing circuitry (400) is further configured to:
- in response to the recirculation loop (245) be disabled, control operation of the second fluid flow control device (242) to enable the fluid connection between the air intake tract (210) and the cathode volume (220), and
- control operation of the third fluid flow control device (243) to enable the fluid connection between the cathode volume (220) and the exhaust conduit (270) of the cathode volume (220), such that the oxygen-free air gradually pushes any residual hydrogen out of the cathode volume (220), result a reduced amount of residual hydrogen in the cathode volume (220).

Example 7: The computer system (400) according to Example 6, wherein the processing circuitry (400) is further configured to:
- estimate a residual hydrogen level present in the cathode volume (220),
- in response to the residual hydrogen present in the cathode volume (220) be lower than a hydrogen threshold value, control operation of the fourth fluid flow control device ((244) to enable the fluid connection between the air intake tract (210) and the air source (290), and start (S8-2), by the process circuitry (402), the fuel cell system (200).

Example 8: A computer implemented method for operating a fuel cell system (200) in connection with start-up of the fuel cell system (200), the fuel cell system (200) comprising:
- the computer system (400) according to Example 1,
- a fuel cell stack (225) comprising an anode side ((230a) and a cathode side (220a), wherein the cathode side (220a) comprises a cathode volume (220) fluidly connectable with an air intake tract (210) through which air is supplied from a connectable air source (290) to the cathode volume (220),
- a catalytic device (260) fluidly connectable with the air intake tract (210),
- a plurality of fluid flow control devices (241, 242, ((244) comprising:
- a first fluid flow control device (241) controllable to enable a recirculation loop (245) between the air intake tract (210) and the catalytic device (260),
- a second fluid flow control device (242) controllable to enable a fluid connection between the air intake tract (210) and the cathode volume (220),
- a fourth fluid flow control device ((244) controllable to enable a fluid connection between the air intake tract (210) and the air source (290), and
- a hydrogen gas supply device (280) configured to supply hydrogen gas to the fuel cell system (200),
the method comprising:
- controlling (S 1), by the processing circuitry (402) of the computer system (400), the hydrogen gas supply device (280) to supply the hydrogen gas to the catalytic device (260) of the fuel cell system (200),
- controlling (S2-1), by the processing circuitry (402), operation of the second fluid flow control device (242) to disable the fluid connection between the air intake tract (210) and the cathode volume (220),
- controlling (S2-2), by the processing circuitry (402), operation of the fourth fluid flow control device ((244) to disable the fluid connection between the air intake tract (210) and the air source (290), and
- controlling (S2-3), by the processing circuitry (402), operation of the first fluid flow control device (241) to enable the recirculation loop (245) between the air intake tract (210) and the catalytic device (260), such that that oxygen of the air present in the air intake tract (210) undergoes a chemical reaction with the supplied hydrogen within the recirculation loop (245), resulting in a reduced amount of oxygen in the air intake tract (210).

Example 9: The method according to Example 8, wherein the fuel cell system (200) further comprises a gas recirculation device (250) configured to recirculate a gas mixture present in the recirculation loop (245), wherein the method further comprises:
- controlling (S3), by the processing circuitry (402), the gas recirculation device (250) to recirculate the gas mixture through the catalytic device (260) within the recirculation loop (245).

Example 10: The method according to any one of Examples 8-9, further comprising:
- estimating (S4), by the processing circuitry (402), a remaining oxygen level in the air within the air intake tract (210),
- in response to the estimated remaining oxygen level being lower than an oxygen threshold value, indicative of oxygen-free air, controlling (S5-1), by the processing circuitry (402), operation of the first fluid flow control device (241) to disable the recirculation loop (245) between the air intake tract (210) and the catalytic device (260), and
- controlling (S5-2), by the processing circuitry (402), the hydrogen gas supply device (280) to stop supplying the hydrogen gas to the catalytic device (260) of the fuel cell system (200),

Example 11: The method according to Example 10, wherein estimating the remaining oxygen level in the gas mixture further comprises:
- monitoring (S4-1), by the processing circuitry (402), a temperature at the catalytic device (260) and/or of the gas mixture,
- estimating (S4-2), by the processing circuitry (402), the remaining oxygen level in the air based on the monitored temperature.

Example 12: The method according to any one of the Examples 8-11, wherein the start-up of the fuel cell system (200) is associated with a condition in which hydrogen gas is present as residual gas in the cathode volume (220).

Example 13: The method according to Example 6, when dependent on any one of Examples 10-11, wherein the plurality of fluid flow control devices further comprises a third fluid flow control device (243) controllable to enable a fluid connection between the cathode volume (220) and an exhaust conduit (270) of the cathode volume (220), wherein the method further comprises:
- in response to the recirculation loop (245) being disabled, controlling (S6-1), by the processing circuitry (402), operation of the second fluid flow control device (242) to enable the fluid connection between the air intake tract (210) and the cathode volume (220), and controlling (S6-2), by the processing circuitry (402), operation of the third fluid flow control device (243) to enable the fluid connection between the cathode volume (220) and the exhaust conduit (270) of the cathode volume (220), such that the oxygen-free air gradually pushes any residual hydrogen out of the cathode volume (220), resulting a reduced amount of residual hydrogen in the cathode volume (220).

Example 14: The method according to Example 13, further comprising:
- estimating (S7), by the processing circuitry (402), a residual hydrogen present in the cathode volume (220),
- in response to the residual hydrogen present in the cathode volume (220) being lower than a hydrogen threshold value, controlling (S8-1), by the processing circuitry (402), operation of the fourth fluid flow control device ((244) to enable the fluid connection between the air intake tract (210) and the air source (290), and starting (S8-2), by the processing circuitry (402), the fuel cell system (200).

Example 15: A computer program product comprising program code for performing, when executed by the processing circuitry, the method of any of Examples 9-14.

Example 16: A non-transitory computer-readable storage medium comprising instructions, which when executed by the processing circuitry, cause the processing circuitry to perform the method of any of Examples 9-14.

Example 17: A fuel cell system (200) for supplying electric power, comprising:
- a fuel cell stack (225) comprising an anode side (230a) and a cathode side (220a), wherein the cathode side (220a) comprises a cathode volume (220) fluidly connectable with an air intake tract (210) through which air is supplied from a connectable air source (290) to the cathode volume (220),
- a catalytic device (260) fluidly connectable with the air intake tract (210),
- a plurality of fluid flow control devices (241, 242, ((244) comprising:
- a first fluid flow control device (241) controllable to enable a recirculation loop (245) between the air intake tract (210) and the catalytic device (260),
- a second fluid flow control device (242) controllable to enable a fluid connection between the air intake tract (210) and the cathode volume (220), and
- a fourth fluid flow control device ((244) controllable to enable a fluid connection between the air intake tract (210) and the air source (290)
- a hydrogen gas supply device (280) configured to supply hydrogen gas to the fuel cell system (200), and
- the computer system (400) according to Examples 1-7

Example 18: The fuel cell system (200) of Example 17, wherein the plurality of fluid flow control devices further comprises a third fluid flow control device (243) controllable to enable a fluid connection between the cathode volume (220) and an exhaust conduit (270) of the cathode volume (220).

Example 19: The fuel cell system (200) of any one of Examples17-18, wherein the hydrogen gas supply device (280) comprises a fuel injector (281) configured to supply the hydrogen gas at a determined injection rate.

Example 20: The fuel cell system (200) of any one of Examples 17-19, wherein the catalytic device (260) is further fluidly connectable with an exhaust conduit (270) of the cathode volume (220), and wherein the first fluid flow control device (241) is further controllable to enable a fluid connection between the catalytic device (260) and the exhaust conduit (270) of the cathode volume (220).

Example 21: The fuel cell system (200) of Example 20, wherein the catalytic device (260) is a catalytic heat exchanger.

Example 22: The fuel cell system (200) of any one of Examples 17-21, wherein the fuel cell system (200) further comprises a gas recirculation device (250) configured to recirculate a gas mixture present in the recirculation loop (245)

Example 22: A fuel cell electric vehicle comprising the fuel cell system (200) of any one of Examples 17-22.

## Claims

1. A computer system (400) comprising processing circuitry (402) configured to operating a fuel cell system (200) in connection with start-up of the fuel cell system (200), the fuel cell system (200) comprising:
- a fuel cell stack (225) comprising an anode side (230a) and a cathode side (220a), wherein the cathode side (220a) comprises a cathode volume (220) fluidly connectable with an air intake tract (210) through which air is supplied from a connectable air source (290) to the cathode volume (220),
- a catalytic device (260) fluidly connectable with the air intake tract (210),
- a plurality of fluid flow control devices (241, 242, 244) comprising:
- a first fluid flow control device (241) controllable to enable a recirculation loop (245) between the air intake tract (210) and the catalytic device (260),
- a second fluid flow control device (242) controllable to enable a fluid connection between the air intake tract (210) and the cathode volume (220),
- a fourth fluid flow control device (244) controllable to enable a fluid connection between the air intake tract (210) and the air source (290), and
- a hydrogen gas supply device (280) configured to supply hydrogen gas to the fuel cell system (200),
the processing circuitry further being configured to:
- control operation of the hydrogen gas supply device (280) to supply the hydrogen gas to the catalytic device (260) of the fuel cell system (200),
- control operation of the second fluid flow control device (242) to disable the fluid connection between the air intake tract (210) and the cathode volume (220),
- control operation of the fourth fluid flow control device (244) to disable the fluid connection between the air intake tract (210) and the air source (290), and
- control operation of the first fluid flow control device (241) to enable the recirculation loop (245) between the air intake tract (210) and the catalytic device (260), such that oxygen of the air present in the air intake tract (210) undergoes a chemical reaction with the supplied hydrogen within the recirculation loop (245), resulting in a reduced amount of oxygen in the air intake tract (210).

2. A computer implemented method for operating a fuel cell system (200) in connection with start-up of the fuel cell system (200), the fuel cell system (200) comprising:
- the computer system (400) according to claim 1,
- a fuel cell stack (225) comprising an anode side (230a) and a cathode side (220a), wherein the cathode side (220a) comprises a cathode volume (220) fluidly connectable with an air intake tract (210) through which air is supplied from a connectable air source (290) to the cathode volume (220),
- a catalytic device (260) fluidly connectable with the air intake tract (210),
- a plurality of fluid flow control devices (241, 242, 244) comprising:
- a first fluid flow control device (241) controllable to enable a recirculation loop (245) between the air intake tract (210) and the catalytic device (260),
- a second fluid flow control device (242) controllable to enable a fluid connection between the air intake tract (210) and the cathode volume (220),
- a fourth fluid flow control device (244) controllable to enable a fluid connection between the air intake tract (210) and the air source (290), and
- a hydrogen gas supply device (280) configured to supply hydrogen gas to the fuel cell system (200),
the method comprising:
- controlling (S 1), by the processing circuitry (402) of the computer system (400), the hydrogen gas supply device (280) to supply the hydrogen gas to the catalytic device (260) of the fuel cell system (200),
- controlling (S2-1), by the processing circuitry (402), operation of the second fluid flow control device (242) to disable the fluid connection between the air intake tract (210) and the cathode volume (220),
- controlling (S2-2), by the processing circuitry (402), operation of the fourth fluid flow control device ((244) to disable the fluid connection between the air intake tract (210) and the air source (290), and
- controlling (S2-3), by the processing circuitry (402), operation of the first fluid flow control device (241) to enable the recirculation loop (245) between the air intake tract (210) and the catalytic device (260), such that that oxygen of the air present in the air intake tract (210) undergoes a chemical reaction with the supplied hydrogen within the recirculation loop (245), resulting in a reduced amount of oxygen in the air intake tract (210).

3. The method according to claim 2, wherein the fuel cell system (200) further comprises a gas recirculation device (250) configured to recirculate a gas mixture present in the recirculation loop (245), wherein the method further comprises:
- controlling (S3), by the processing circuitry (402), the gas recirculation device (250) to recirculate the gas mixture through the catalytic device (260) within the recirculation loop (245).

4. The method according to any one of claims 2-3, further comprising:
- estimating (S4), by the processing circuitry (402), a remaining oxygen level in the air within the air intake tract (210),
- in response to the estimated remaining oxygen level being lower than an oxygen threshold value, indicative of oxygen-free air, controlling (S5-1), by the processing circuitry (402), operation of the first fluid flow control device (241) to disable the recirculation loop (245) between the air intake tract (210) and the catalytic device (260), and
- controlling (S5-2), by the processing circuitry (402), the hydrogen gas supply device (280) to stop supplying the hydrogen gas to the catalytic device (260) of the fuel cell system (200),

5. The method according to claim 4, wherein estimating the remaining oxygen level in the gas mixture further comprises:
- monitoring (S4-1), by the processing circuitry (402), a temperature at the catalytic device (260) and/or of the gas mixture,
- estimating (S4-2), by the processing circuitry (402), the remaining oxygen level in the air based on the monitored temperature.

6. The method according to any one of the claims 2-5, wherein the start-up of the fuel cell system (200) is associated with a condition in which hydrogen gas is present as residual gas in the cathode volume (220).

7. The method according to claim 6, when dependent on any one of claims 4-5, wherein the plurality of fluid flow control devices further comprises a third fluid flow control device (243) controllable to enable a fluid connection between the cathode volume (220) and an exhaust conduit (270) of the cathode volume (220), wherein the method further comprises:
- in response to the recirculation loop (245) being disabled, controlling (S6-1), by the processing circuitry (402), operation of the second fluid flow control device (242) to enable the fluid connection between the air intake tract (210) and the cathode volume (220), and controlling (S6-2), by the processing circuitry (402), operation of the third fluid flow control device (243) to enable the fluid connection between the cathode volume (220) and the exhaust conduit (270) of the cathode volume (220), such that the oxygen-free air gradually pushes any residual hydrogen out of the cathode volume (220), resulting a reduced amount of residual hydrogen in the cathode volume (220).

8. The method according to claim 7, further comprising:
- estimating (S7), by the processing circuitry (402), a residual hydrogen level in the cathode volume (220),
- in response to the residual hydrogen present in the cathode volume (220) being lower than a hydrogen threshold value, controlling (S8-1), by the processing circuitry (402), operation of the fourth fluid flow control device ((244) to enable the fluid connection between the air intake tract (210) and the air source (290), and starting (S8-2), by the processing circuitry (402), the fuel cell system (200).

9. A computer program product comprising program code for performing, when executed by the processing circuitry, the method of any of claims 2-8.

10. A non-transitory computer-readable storage medium comprising instructions, which when executed by the processing circuitry, cause the processing circuitry to perform the method of any of claims 2-8.

11. A fuel cell system (200) for supplying electric power, comprising:
- a fuel cell stack (225) comprising an anode side (230a) and a cathode side (220a), wherein the cathode side (220a) comprises a cathode volume (220) fluidly connectable with an air intake tract (210) through which air is supplied from a connectable air source (290) to the cathode volume (220),
- a catalytic device (260) fluidly connectable with the air intake tract (210),
- a plurality of fluid flow control devices (241, 242, 244) comprising:
- a first fluid flow control device (241) controllable to enable a recirculation loop (245) between the air intake tract (210) and the catalytic device (260),
- a second fluid flow control device (242) controllable to enable a fluid connection between the air intake tract (210) and the cathode volume (220), and
- a fourth fluid flow control device ((244) controllable to enable a fluid connection between the air intake tract (210) and the air source (290),
- a hydrogen gas supply device (280) configured to supply hydrogen gas to the fuel cell system (200), and
- the computer system (400) according to claim 1.

12. The fuel cell system (200) of claim 11, wherein the plurality of fluid flow control devices further comprises a third fluid flow control device (243) controllable to enable a fluid connection between the cathode volume (220) and an exhaust conduit (270) of the cathode volume (220).

13. The fuel cell system (200) of any one of claims 11-12, wherein the catalytic device (260) is further fluidly connectable with an exhaust conduit (270) of the cathode volume (220), and wherein the first fluid flow control device (241) is further controllable to enable a fluid connection between the catalytic device (260) and the exhaust conduit (270) of the cathode volume (220).

14. The fuel cell system (200) any one of claims 11-13, wherein the catalytic device (260) is a catalytic heat exchanger.

15. A fuel cell electric vehicle (1) comprising the fuel cell system (200) of any one of claims 11-14.
